# EUROPÄISCHE PATENTANMELDUNG

(11) **EP 3 354 548 A1**
(43) Veröffentlichungstag der Anmeldung: **01.08.2018**
(21) Anmeldenummer: 18154513.8
(22) Anmeldetag: 31.01.2018
(51) Int. Cl.: B62K 5/10, B62K 5/08, B62K 5/05, B62K 9/02, A63H 17/18, A63H 17/36, B62D 1/02, B62D 9/02

(54) **NEIGUNGSGESTEUERTE LENKUNG UND FAHRZEUG MIT NEIGUNGSGESTEUERTER LENKUNG**

(30) Priorität: 31.01.2017 DE 202017000506 U
(71) Anmelder: Thiemann, Jan, 48161 Münster (DE); Ferdinand Bethäuser GmbH & Co KG, 90766 Fürth (DE)
(72) Erfinder: THIEMANN, Jan, 48161 Münster (DE)
(74) Vertreter: FDST Patentanwälte

(57) **Zusammenfassung**

Neigungsgesteuerte Lenkung zum Lenken eines Fahrzeugs (20), das aktiv mit dem Körper gesteuert wird. Die Lenkung umfasst einen Achsträger und eine neigungsübertragende Achse (10), die beweglich gegenüber dem Achsträger angeordnet ist. Die Lenkung umfasst außerdem eine Lenkachse (8), die mit der neigungsübertragenden Achse (10) kraftübertragungstechnisch gekoppelt ist und die zur Übertragung eines Lenkimpulses von der neigungsübertragenden Achse (10) auf zwei mit dem Achsträger beweglich verbundene Räder (2) dient. Ein Lenkeinschlag der Räder (2) wird dabei durch die Neigung der neigungsübertragenden Achse (10) und den sich daraus ergebenen Weg der Lenkachse (8) bestimmt.

## Beschreibung

Neigungsgesteuerte Lenkungen sind in verschiedenen Arten aufzufinden. So z.B. zum einen bei komplett lenkenden Skateboardachsen, bei denen der gesamte Achskörper starr lenkt, zum anderen Achsen von durch Gewichtsverlagerung gelenkten und unter der Marke "Kickboard" bekannten Tretrollern, bei denen die einzelnen Reifen (d. h. Räder) über Querstellung und Neigung in der Vertikalen lenken. In dem Fall der klassischen "Skateboardachse" entsteht ein großer Wendekreis, da dieser den Radius des äußeren Rades, bei maximalem Lenkeinschlag betrifft. Im Fall einer Kickboardachse (ausgehend von der klassischen, dreirädrigen Konstruktion mit vorne zwei gelenkten Rädern und hinten einem ungelenkten Rad) behält immer nur ein kleiner Teil der gekrümmten Lauffläche des Vorderrades, Kontakt mit dem Boden. Dies kann zum Untersteuern führen.

Der Erfindung liegt die Aufgabe zugrunde, eine verbesserte, neigungsgesteuerte Lenkung zu ermöglichen.

Diese Aufgabe wird erfindungsgemäß gelöst durch eine neigungsgesteuerte Lenkung mit den Merkmalen des Anspruchs 1. Des Weiteren wird diese Aufgabe erfindungsgemäß gelöst durch ein Fahrzeug mit den Merkmalen des Anspruchs 7. Vorteilhafte Ausführungsformen der Erfindung sind in den Unteransprüchen und der nachfolgenden Beschreibung dargelegt.

Die erfindungsgemäße neigungsgesteuerte Lenkung weist eine Achskonstruktion mit gelenkten Rädern (nicht mit einer durchgehend lenkenden Achse ähnlich einem Skateboard) und einer neigungswinkelgesteuerten Achse auf.

Vorzugsweise handelt es sich bei der Achskonstruktion um eine Vorderachse. Diese neigungswinkelgesteuerte Vorderachse funktioniert, vereinfacht dargestellt, wie eine einfache Lenkachse mit einem Umlenklager und einem zugeordneten Anlenkpunkt, über den die Neigung der "Karosserie", insbesondere des Fahrzeugs auf die Lenkachse übertragen wird.

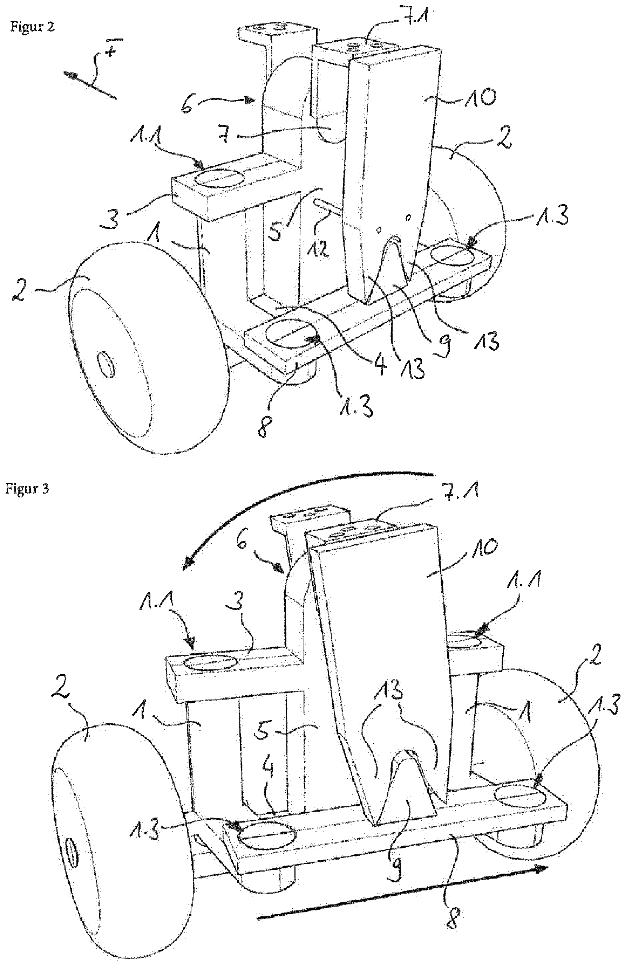

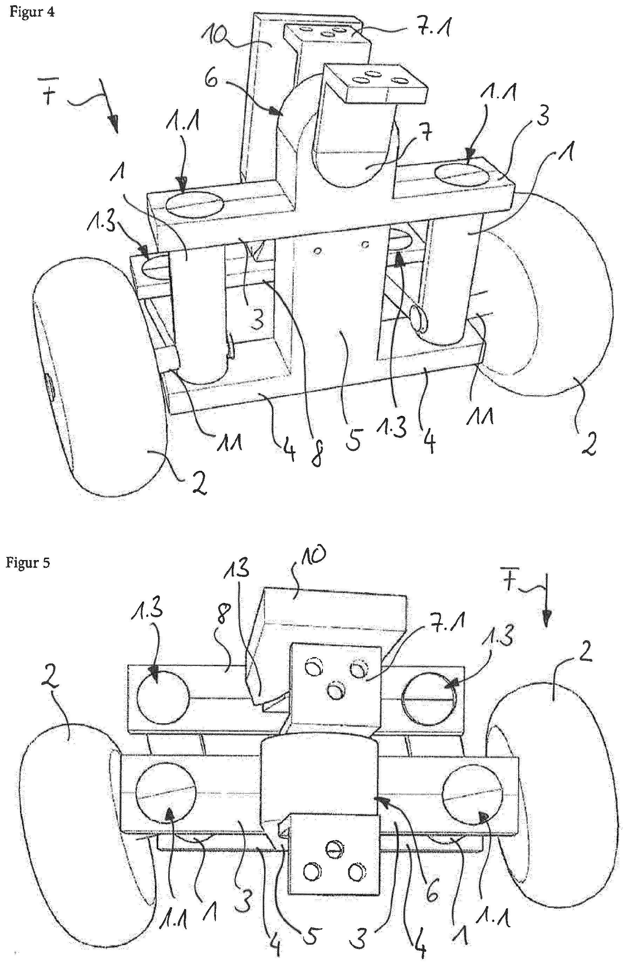

Das neigungsgesteuerte Vorderachslenkprinzip ist an dem Beispiel eines durch einen dreirädrigen Kinderrutscher gebildeten Fahrzeugs - schematisch dargestellt in den Figuren 1 bis 7 - erklärt. Darin zeigen:
- Figur 1: in einer schematischen Explosionszeichnung eine Achskonstruktion einer neigungswinkelgesteuerten Vorderachslenkung,
- Figur 2: in einer Perspektivansicht die Achskonstruktion mit einer neigungsübertragenden Achse in 0° Neigungsposition,
- Figur 3: in einer Ansicht in Vorwärts-Fahrtrichtung die Achskonstruktion von hinten in einem eingelegten Zustand, wobei die neigungsübertragende Achse in 15° Neigungsposition angeordnet ist,
- Figur 4: in Ansicht entgegen der Vorwärts-Fahrtrichtung die Achskonstruktion im eingelenkten Zustand gemäß Figur 3,
- Figur 5: in einer Ansicht von "oben" die Achskonstruktion im eingelenkten Zustand gemäß Figur 3,
- Figur 6: in einer schematischen Perspektivansicht ein komplettes Fahrzeug mit eingebauter Vorderachslenkung in einem nicht eingelenkten Zustand, und
- Figur 7: in einer weiteren Perspektivansicht das komplette Fahrzeug bei eingelenkter Vorderachslenkung und geneigter Karosserie.

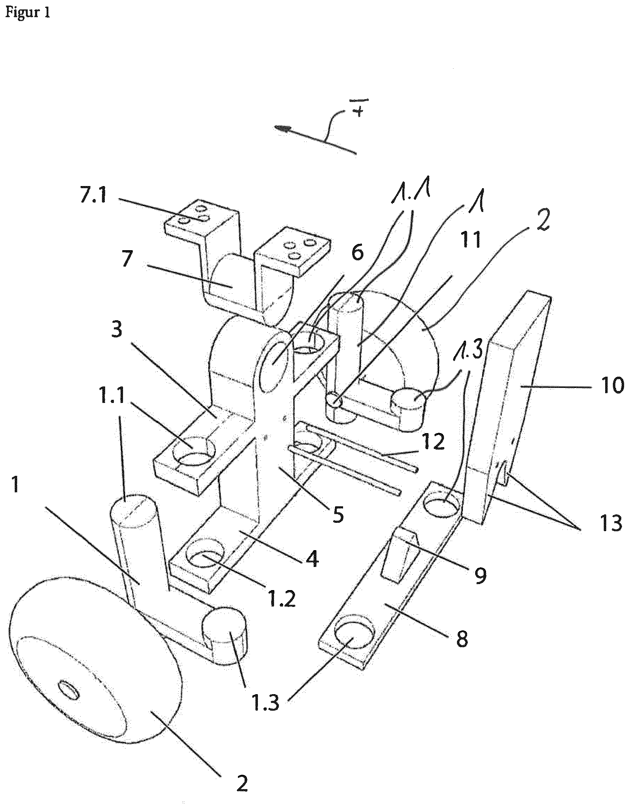

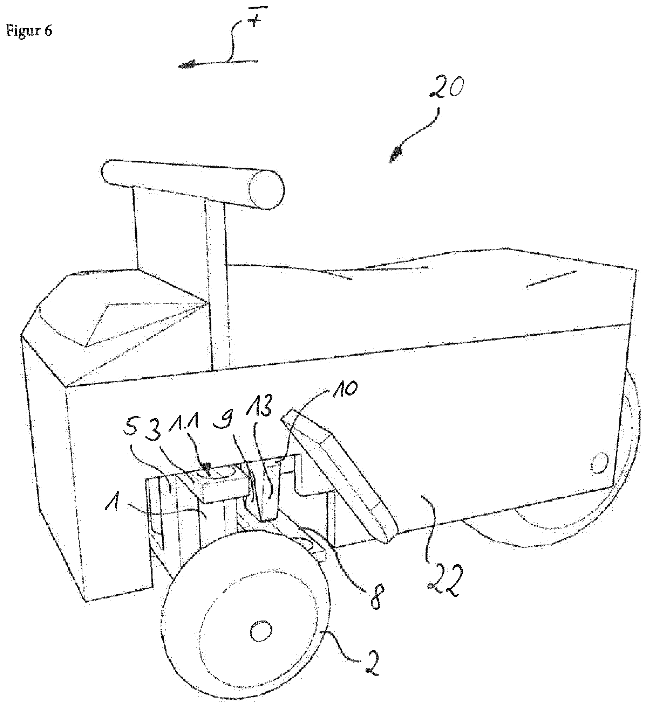

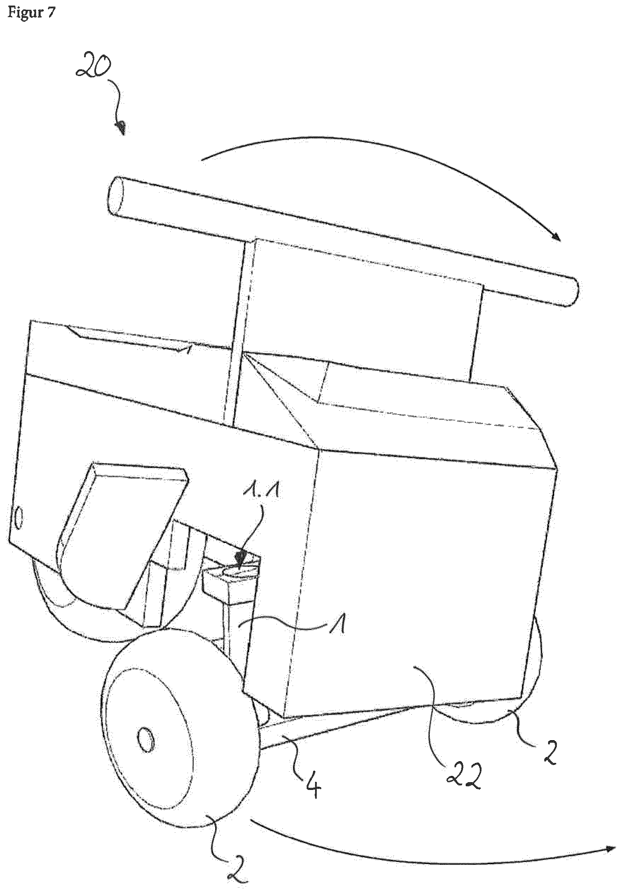

In Figur 1 ist eine neigungsgesteuerte Lenkung, konkret eine Vorderachslenkung dargestellt. Diese ist im bestimmungsgemäßen Einbauzustand Teil eines in den Figuren 6 und 7 dargestellten Fahrzeugs, konkret eines Kinderrutschers 20. Die Vorderachslenkung umfasst (konkret zwei) Achsschenkel 1, die zur Aufhängung jeweils eines Reifens 2 (auch als "Rad" bezeichnet) dienen. Die Achsschenkel 1 sind mit einem Achsträger verbunden, der durch einen oberen Achsträger 3, einen unteren Achsträger 4 und ein diese verbindendes Achsträger-Mittelstück 5 gebildet ist. Konkret sind die Achsschenkel 1 schwenkbar mit diesem Achsträger gekoppelt. Dazu ist der jeweilige Achsschenkel 1 über eine obere Achsschenkellagerung 1.1 mit dem oberem Achsträger 3 und einer unteren Achsschenkellagerung 1.2 mit dem unteren Achsträger 4 gekoppelt. Der Achsschenkel 1 bildet dabei insbesondere eine in der Vertikalen stehende Schwenkachse für die Reifen 2. An den Achsschenkeln 1 befinden sich die Reifen 2, welche zusammen mit dem Radlager 11 verbunden sind, d. h. die Reifen 2 sind über die Radlager 11 mit den Achsschenkeln 1 gekoppelt. An einem Lagerpunkt, als "(Achsschenkel-)Lenkachsenlager 1.3" bezeichnet, ist der jeweilige Achsschenkel 1 mit einer Lenkachse 8 verbunden. Das Lenkachsenlager 1.3 ist in Vorwärts-Fahrtrichtung F des Kinderrutschers 20 dem Aufhängepunkt des jeweiligen Radlagers 11 nachlaufend und somit insbesondere entgegen der Vorwärts-Fahrtrichtung F versetzt zu der (fluchtend zu den Achsschenkellagerungen 1.1 und 1.2 ausgerichteten) Schwenkachse angeordnet. Durch das Bewegen der Lenkachse 8 nach links und rechts lenkt der Achsschenkel 1 somit ein. Den Lenkimpuls gibt eine im bestimmungsgemäßen Einbauzustand (s. Figuren 6 und 7) an der Karosserie 22 des Kinderrutschers 20 befestigte neigungsübertragende Achse 10, welche in diesem Beispiel ein Teil der Karosserie 22 ist. Oberhalb des Achsträgers befindet sich eine Lagerbuchse 6. Diese dient dazu, die Karosserie 22 mittels einer Lagerachse 7 zu tragen und zu lagern. In der Lagerbuchse 6 ist die Lagerachse 7 aufgenommen. Diese ist über eine Befestigung 7.1 mit der Karosserie 22 verbunden.

Neigt sich nun die Karosserie 22 nach links oder rechts, so ist diese über das aus der Lagerbuchse 6 und der Lagerachse 7 gebildete Achslager, das insbesondere einen Anlenkpunkt für die Karosserie 22 und die neigungsübertragende Achse 10 bildet, geführt. Durch diese Neigung wird die neigungsübertragende Achse 10, als verbundener Bestandteil der Karosserie 22, im gleichen Maße geneigt. Hierdurch wird über zwei Zähne 13, die endseitig an der neigungsübertragenden Achse 10 angeordnet sind, ein Anlenkdorn 9, der an der Lenkachse 8 angeordnet ist, nach links oder rechts verschoben. Ist die Karosserie 22 nach, vom Fahrer aus links geneigt, so wird die Lenkachse 8 nach rechts (vom Fahrer aus) verschoben. Hierdurch resultiert, dass das vom Fahrer aus rechte Lenkachsenlager 1.3 nach außen, von der Karosserie 22 weg gedrückt wird. Hierdurch resultiert, dass das rechte Rad (d. h. der in Vorwärts-Fahrtrichtung F rechte Reifen 2) nach links einlenkt, insbesondere ohne dass dieser Reifen 2 mit seiner Radialebene aus der Vertikalen gekippt wird. Das gleiche Prinzip erfolgt auf der vom Fahrer aus linken Seite. Hier wird das linke Lenkachsenlager 1.3 nach rechts, näher an die Karosserie 22 gezogen. Infolge dessen lenkt das vom Fahrer aus linke Vorderrad (d. h. der in Vorwärts-Fahrtrichtung F linke Reifen 2) ebenfalls nach links. Kurzum, das Fahrzeug, d. h. der Kinderrutscher 20, lenkt in die jeweilige Richtung, zu der es geneigt wird.

Die neigungsübertragende Achse 10 mit den Zähnen 13 und der Anlenkdorn 9 funktionieren prinzipiell wie Zahnräder. Die zwei Zähne 13 und der Anlenkdorn 9 behalten stets Kontakt, um die Neigung möglichst verlustfrei / direkt zu übertragen, um eine direkte Lenkung zu ermöglichen. Die Lenkachsenbewegung nach links und rechts ist an die Höhendifferenz vom Mittelpunkt des Achslagers (gebildet durch die Lagerbuchse 6 und die Lagerachse 7) und des Kontaktpunkts zwischen den Zähnen 13 und dem Anlenkdorn 9 gebunden. Die Lenkachsbewegung ist das Resultat des Zirkelschlages, ausgehend vom Mittelpunkt des Achslagers bis zum Kontaktpunkt. Genauer gesagt, entspricht der Lenkeinschlag dem Weg der Lenkachse, welcher von der horizontalen Strecke des Zirkelschlages zwischen dem Standpunkt A bei 0° Neigung und dem Standpunkt B bei Neigung, bestimmt wird. Schlussfolgernd, je größer der Abstand zwischen dem Mittelpunkt des Achslagers und des Kontaktpunktes, desto größer der Lenkeinschlag (bei gleicher Neigung).

Um das Fahrzeug, konkret den Kinderrutscher 20, bei Nichtbelastung, von sich selbst aus in eine 0° Neigungsposition zu bringen, sind Federn angebracht. Diese sind in verschiedenen Varianten und Anbaupunkten möglich. In dem Beispiel der Abbildungen befinden sich zwei Federstahlstäbe 12 am Achsträger-Mittelstück 5 verbindend zur neigungsübertragenden Achse 10. Diese Federstahlstäbe 12 federn das Fahrzeug durch ihre Spannung beim Verbiegen in die jeweilige Richtung. Diese könnten sich aber auch beispielsweise zwischen dem unteren Achsträger 4 und der Lenkachse 8 befinden. Eine weitere Alternative ist das Federn durch Spiralfedern, welche sich beispielsweise zwischen dem oberen Achsträger 3 und der Karosserie 22 befinden. Gleiches gilt für Stoßdämpfer oder ähnlichen federnden Hilfsmitteln. Der maximale Lenkeinschlag ist durch verschiedene Möglichkeiten zu begrenzen. Ein mögliches Beispiel ist es, den Lenkeinschlag über die Stärke der Federn zu begrenzen. Starke Federn würden bis zu einem maximalen Neigungswinkel einfedern, ab einem gewissen Punkt müsste unüblich hohe Kraft aufgewendet werden, um sie zum weiteren Einfedern zu bewegen.

Ebenso bietet der Einbau eines Begrenzers die Möglichkeit, den maximalen Neigungswinkel zu bestimmen. Dieser ist z. B. am Achslager befestigt und verhindert ein Neigen über diesen gewissen Punkt hinaus.

In dem Beispiel der Figuren 6 und 7 ist das Fahrzeug als Dreirad ausgelegt. Alternativ ist die anhand von Figur 1 erläuterte Achskonstruktion aber auch in Kombination mit einer Pendelachse möglich.

### Bezugszeichenliste

- 1: Achsschenkel
- 1.1: obere Achsschenkellagerung
- 1.2: untere Achsschenkellagerung
- 1.3: Achsschenkel-Lenkachsenlager
- 2: Reifen
- 3: oberer Achsträger
- 4: unterer Achsträger
- 5: Achsträger-Mittelstück
- 6: Lagerbuchse
- 7: Lagerachse
- 7.1: Befestigung
- 8: Lenkachse
- 9: Anlenkdorn
- 10: neigungsübertragende Achse
- 11: Radlager
- 12: Federstahlstäbe
- 13: Zähne
- 20: Kinderrutscher
- 22: Karosserie

- F: Vorwärts-Fahrtrichtung

## Patentansprüche

1. Neigungsgesteuerte Lenkung zum Lenken eines Fahrzeugs (20), das aktiv mit dem Körper gesteuert wird,
mit einem Achsträger, mit einer neigungsübertragenden Achse (10), die beweglich gegenüber dem Achsträger angeordnet ist, und mit einer Lenkachse (8), die mit der neigungsübertragenden Achse (10) kraftübertragungstechnisch gekoppelt ist und die zur Übertragung eines Lenkimpulses von der neigungsübertragenden Achse (10) auf zwei mit dem Achsträger beweglich verbundene Räder (2) dient, so dass ein Lenkeinschlag der Räder (2) durch die Neigung der neigungsübertragenden Achse (10) und den sich daraus ergebenen Weg der Lenkachse (8) bestimmt wird.

2. Neigungsgesteuerte Lenkung nach Anspruch 1, **dadurch gekennzeichnet, dass** die neigungsübertragende Achse (10) im bestimmungsgemäßen Einbauzustand an dem Fahrzeug (20) an einer Karosserie (22) oder einem Rahmen des Fahrzeugs (20) befestigt ist oder ein fester Bestandteil der Karosserie (22) ist.

3. Neigungsgesteuerte Lenkung nach einem vorherigen Anspruch, **dadurch gekennzeichnet,**
**dass** die Räder (2) in die Richtung eingelenkt werden, in der das Fahrzeug (20) geneigt wird.

4. Neigungsgesteuerte Lenkung nach einem vorherigen Anspruch, **dadurch gekennzeichnet,**
**dass** im bestimmungsgemäßen Einbauzustand an dem Fahrzeug (20) die Karosserie (22) über ein Achslager mit dem Achsträger verbunden ist.

5. Neigungsgesteuerte Lenkung nach einem vorherigen Anspruch, **dadurch gekennzeichnet,**
**dass** die neigungsübertragende Achse (10) mittels Zähnen (13) und eines an der Lenkachse (8) als von den Zähnen (13) separates Teil angeordneten Dorns (9) über Kontakt mit der Lenkachse (8) verbunden ist.

6. Neigungsgesteuerte Lenkung nach einem vorherigen Anspruch, **dadurch gekennzeichnet,**
**dass** die Räder (2) beim Einlenken nicht in der Vertikalen zur Seite geneigt werden, insbesondere dass eine Radialebene des jeweiligen Rads (2) beim Einlenken stets in der Vertikalen ausgerichtet bleibt, und somit bei z.B. glatter Lauffläche, größtmöglicher Kontakt zum Untergrund behalten wird.

7. Fahrzeug (20) mit einer neigungsgesteuerte Lenkung gemäß einem der Ansprüche 1 bis 6.
